# EUROPÄISCHE PATENTSCHRIFT

(11) **EP 4 581 215 B1**
(45) Veröffentlichungstag und Bekanntmachung des Hinweises auf die Patenterteilung: **07.10.2026**
(21) Anmeldenummer: 23798762.3
(22) Anmeldetag: 30.10.2023
(51) Int. Cl.: E03B 1/04, B64D 11/02, E03D 5/00, E03D 5/02

(54) **GRAUWASSERTANK UND GRAUWASSERSYSTEM**
GREY WATER TANK AND GREY WATER SYSTEM
RÉSERVOIR D'EAU GRISE ET SYSTÈME D'EAU GRISE

(30) Priorität: 02.11.2022 DE 102022128992
(43) Veröffentlichungstag der Anmeldung: 09.07.2025
(73) Patentinhaber: Diehl Aviation Gilching GmbH, 82205 Gilching (DE)
(72) Erfinder: SKIBINSKI, Bertram, 04416 Markkleeberg (DE); KRENZ, Hannes, 01326 Dresden (DE); PHILIPP, Jan Boris, 81673 München (DE)
(74) Vertreter: Diehl Patentabteilung
(86) Internationale Anmeldenummer: PCT/EP2023/080181
(87) Internationale Veröffentlichungsnummer: WO 2024/094590

(56) Entgegenhaltungen:
- WO-A1-2022/039754
- WO-A2-2014/078640
- DE-A1- 102016 218 002
- DE-B3- 102013 205 084

## Beschreibung

Die vorliegende Erfindung betrifft einen Grauwassertank und ein diesen enthaltendes Grauwassersystem, die für Fahrzeuge (insbesondere für Flugzeuge) geeignet sind.

Flugzeuge, Schiffe, Züge und auch andere Fahrzeuge haben darin in der Regel Toiletten und Waschbecken (z.B. Handwaschbecken, Dusche, etc.) und zum Teil auch Spülgeräte (z.B. Geschirrspülmaschine). Zudem haben solche Fahrzeuge häufig einen Grauwassertank zum Lagern von Grauwasser (d.h. Abwasser aus Waschbecken und Spülgeräten), wobei schon vorgeschlagen wurde, das Grauwasser auch noch als Spülflüssigkeit insbesondere für die Toiletten wiederzuverwenden, um die benötigte Frischwassermenge in den Fahrzeugen zu reduzieren. Außerdem haben solche Fahrzeuge häufig ein Vakuumentsorgungssystem zum Saugen des Spülwassers aus den Toiletten und/oder des Grauwassers aus dem Grauwassertank in einen Abwassertank durch Unterdruck im Abwassertank und in der jeweiligen Abwasserleitung, der durch einen Unterdruckgenerator und/oder niedrigen Außenluftdruck in einer Abluftleitung des Abwassertanks generiert wird. Bei der vorgeschlagenen Weiterleitung des Grauwassers aus dem Grauwassertank als Spülflüssigkeit zu Toiletten enthält der Grauwassertank vorzugsweise eine Filterkammer im Tankgehäuse, um Verschmutzungen des Grauwassers auszufiltern, damit das Grauwasser nur mit möglichst wenigen Verschmutzungen zu den Toiletten weitergeleitet wird. Während eines Ausleitvorgangs des Grauwassers aus dem Grauwassertank zum Abwassertank mittels des Vakuumentsorgungssystems werden dann möglichst auch die ausgefilterten Verschmutzungen aus der die Filterkammer bildenden Filterwand abgesaugt. Da das Grauwasser in der Praxis gelegentlich einen großen Anteil und/oder spezielle Arten von Verschmutzungen enthält, kann die Filterwand durch die Verschmutzungen sogar zumindest teilweise verblockt werden. Eine solche Verblockung der Filterwand kann dann bei bisher vorgeschlagenen Grauwassertanks während des Ausleitvorgangs mittels des Vakuumentsorgungssystems meistens nicht gereinigt werden, sodass die Verblockung einen Funktionsverlust des Grauwassertanks erzeugt, weshalb gegebenenfalls später bei abgestelltem Fahrzeug irgendein anderer aufwändiger Reinigungsvorgang durchgeführt werden muss, damit das Grauwasser künftig wieder als Spülflüssigkeit zu den Toiletten weitergeleitet werden kann.

Aus der WO 2014 / 078 640 A2 ist ein Filtersystem bekannt, das zum Filtern von mit Schmutz beladenem Wasser verwendet werden kann, sowie Systeme zum Reinigen des Filtersystems unter Verwendung eines Vakuumspülsystems, um einen Rückspülfluss durch den Filter des Filtersystems zu erzeugen. Das Filtersystem findet insbesondere Anwendung an Bord von Personentransportfahrzeugen, die über ein Vakuumabwassersystem verfügen, wie beispielsweise Flugzeuge. Das Filtersystem bietet die Möglichkeit, flüssige Ressourcen in einer Umgebung mit einem Vakuumabfallsystem zu sammeln, zu behandeln und wiederzuverwenden. Das Filtersystem weist einen durchgehenden Polymergewebefilter auf.

Aus der DE 10 2016 218 002 A1 ist eine Aufbereitungsvorrichtung für Grauwasser für ein Schienenfahrzeug bekannt, mit einem Grauwasserbehälter, einem Grauwasserzulauf in einem Einlassbereich, einem Ablauf für aufbereitetes Grauwasser in einem Auslassbereich und einem Kulissenfilter zwischen Ein- und Auslassbereich, welcher zumindest einen beweglichen Schieber aufweist, der in einer abgesenkten Position den Boden des Gauwasserbehälters berührt und in einer angehobenen Position von diesem abgehoben ist, wobei der Boden des Gauwasserbehälters vom Einlassbereich zum Auslassbereich ansteigend ist, wobei ein Reinigungsabfluss bodenseitig im Einlassbereich angeordnet ist, wobei ein Frischwasserzulauf zur Zufuhr von Frischwasser im Auslassbereich angeordnet ist.

Aus der WO 2022 / 039 754 A1 ist eine Flüssigkeitsrecyclingeinheit bekannt zur Verwendung an Bord eines Flugzeugs oder eines anderen Personentransportfahrzeugs. Die Flüssigkeitsrecyclingeinheit fängt verschiedene Arten gebrauchter Flüssigkeiten auf, filtert oder behandelt die Flüssigkeiten auf andere geeignete Weise und recycelt die Flüssigkeiten für verschiedene Verwendungszwecke an Bord des Fahrzeugs.

Aus der DE 10 2013 205 084 B3 ist ein Schienenfahrzeug mit einer Vorrichtung zur Aufbereitung von Grauwasser bekannt, die einen Grauwasserbehälter aufweist, der mit einem deckelseitigen Zulauf für Grauwasser, einem bodenseitigen Ablauf für aufbereitetes Grauwasser und einem zwischen dem Zulauf für Grauwasser und dem Ablauf für aufbereitetes Grauwasser angeordneten Filter ausgestattet ist, wobei der Filter von einem Kulissenfilter gebildet ist und der Grauwasserbehälter wenigstens einen Schmutzpartikelauslass in seinem Bodenbereich aufweist.

Es ist die Aufgabe der Erfindung, einen verbesserten Grauwassertank bzw. ein verbessertes Grauwassersystem zu schaffen, der/das eine effektivere und zulässigere Reinigung des Grauwassertanks und insbesondere auch deren Filterwand gewährleistet, insbesondere sogar im Fall einer durch Verschmutzungen zumindest teilweise verblockten Filterwand, und somit einen Funktionsverlust des Grauwassertanks auch bei hohem Verschmutzungsanteil des eingeleiteten Grauwassers vermeiden kann.

Diese Aufgabe wird gelöst durch den Erfindungsgegenstand, der in den unabhängigen Ansprüchen 1 und 12 definiert ist. Einige vorteilhafte Ausgestaltungen und Weiterbildungen der Erfindung sind Gegenstand der abhängigen Ansprüche.

Der Grauwassertank gemäß der Erfindung umfasst ein Tankgehäuse mit einem durch einen Tankgehäuseboden, eine Tankgehäusedecke und eine sich zwischen dem Tankgehäuseboden und der Tankgehäusedecke erstreckenden Tankgehäuseseitenwand gebildeten Innenraum zum Aufnehmen von Grauwasser; eine Filterwand, die innerhalb des Tankgehäuses zwischen dem Tankgehäuseboden und der Tankgehäusedecke so angeordnet ist, dass ein Tankinnenraum innerhalb der Filterwand und ein Tankaußenraum zwischen der Filterwand und der Tankgehäuseseitenwand vorhanden sind, wobei die Filterwand angrenzend an einen ersten, unteren durchlässigen Filterwandabschnitt in ihrem dem Tankgehäuseboden zugewandten Bereich einen zweiten Filterwandabschnitt mit gegenüber dem ersten Filterwandabschnitt niedrigerer mikrobiologischer Ansiedlungsfähigkeit aufweist; eine Füllstandssensorik zum Erfassen eines Füllstands des Tankgehäuses mit Grauwasser; einen an der Tankgehäusedecke im Bereich des Tankinnenraums vorgesehenen Anschluss für eine Grauwassereinleitung von wenigstens einer Grauwasser abgebenden Vorrichtung, insbesondere Waschvorrichtung (z.B. Handwaschbecken, Dusche, Geschirrspülmaschine); einen am Tankgehäuse vorgesehenen Anschluss für eine Grauwasserweiterleitung zu wenigstens einer Spülflüssigkeit benutzenden Vorrichtung, insbesondere Toilette; einen am Tankgehäuseboden im Bereich des Tankinnenraums vorgesehenen Anschluss für eine Abwasserleitung zum Ausleiten des im Tankgehäuse vorhandenen Grauwassers mittels eines Vakuumentsorgungssystems; und ein im Anschluss für die Grauwassereinleitung angeordnetes Luftstrombegrenzungselement, das konfiguriert ist, um während eines Ausleitvorgangs des Grauwassers mittels des Vakuumentsorgungssystems einen Luftstrom von der Grauwassereinleitung in den Tankinnenraum innerhalb der Filterwand zu begrenzen.

Während des Ausleitvorgangs des Grauwassers mittels des Vakuumentsorgungssystems wird das Grauwasser durch den Unterdruck im Vakuumentsorgungssystem aus dem Grauwassertank ausgesaugt und wird dadurch auch im Tankinnenraum des Grauwassertanks der Druck reduziert, sodass von der wenigstens einen Grauwasser abgebenden Vorrichtung und von der wenigstens einen das Grauwasser als Spülflüssigkeit benutzenden Vorrichtung jeweils ein Luftstrom in den Tankinnenraum bzw. den Tankaußenraum des Grauwassertanks gesaugt und durch die Filterwand geströmt wird, durch den die Verschmutzungen abgelöst und dann zusammen mit dem Grauwasser ausgeleitet werden. Falls die Filterwand jedoch zumindest teilweise durch Verschmutzungen verblockt ist, können diese Luftströme nicht einfach durch die Filterwand strömen, um die Verschmutzungen abzulösen. Das erfindungsgemäß zusätzlich eingebaute Luftstrombegrenzungselement kann aber während des Ausleitvorgangs mittels des Vakuumentsorgungssystems den Luftstrom von der Grauwassereinleitung in den Tankinnenraum begrenzen (etwas begrenzen oder sogar ganz sperren), wodurch wegen weniger Inhalt im Tankinnenraum der Druckunterschied zwischen Tankinnenraum und Tankaußenraum vergrößert wird. Durch dieses geänderte Druckverhältnis wird der Luftstrom von der Grauwasserweiterleitung stärker vom Tankaußenraum zum Tankinnenraum gesaugt und kann somit sogar einen verblockten Teil der Filterwand durchströmen. Als Ergebnis kann hierdurch die Verschmutzung effektiver von der Filterwand gelöst und in das ausströmende Grauwasser gespült werden, wodurch die Reinigung der Filterwand sehr effektiv ist und der Grauwassertank somit sicherer funktionsfähig ist zum Weiterleiten eines nicht zu schmutzigen Grauwassers zur Grauwasser als Spülflüssigkeit benutzenden Vorrichtung.

Am zweiten Filterwandabschnitt kann sich allenfalls nur sehr wenig oder bestenfalls keine Verschmutzung anheften, da dieser Filterwandabschnitt eine geringere mikrobiologische Ansiedlungsfähigkeit aufweist als der erste Filterwandabschnitt. Unter mikrobiologischer Ansiedlungsfähigkeit wird die Fähigkeit verstanden, mit der sich mikrobiologische Partikel an der Filterwand ansiedeln können, also Mikroorganismen und/oder Schmutzpartikel sich an die Filterwand anhaften können. Sie ist insbesondere abhängig von der Größe der Ansiedlungsfläche und vom Material. Der zweite Filterwandabschnitt wird zumindest an seiner Oberfläche aus einem Material gebildet, bei dem Mikroorganismen und/oder Schmutzpartikel nur schlecht bis gar nicht anhaften können. Es handelt sich dabei insbesondere um Materialien mit einer glatten Oberfläche, die also eine geringe Ansiedlungsfläche und somit geringe Ansiedlungsfähigkeit aufweisen. Insbesondere ist das Material für Wasser, insbesondere Grauwasser undurchlässig. Die Filterwand, insbesondere der zweite Filterwandabschnitt ist vorzugsweise aus PTFE gefertigt. Der Abstand eines unteren Endes des zweiten Filterwandabschnitts von einem oberen Ende des zweiten Filterwandabschnitts beträgt insbesondere mehrere Zentimeter. Die Fläche des zweiten Filterwandabschnitts an der Gesamtfläche der Filterwand beträgt bevorzugt 10% bis 90%, besonders bevorzugt 20% bis 80%. Da sich die Verschmutzung vornehmlich an einem durchlässigen Filterwandabschnitt anheften kann, wird die Filterwand insgesamt weniger verschmutzt, sodass die Reinigung des Grauwassertanks und insbesondere seiner Filterwand weniger Aufwand benötigt und somit effektiver ist.

Vorsorglich sei darauf hingewiesen, dass der Grauwassertank die Füllstandssensorik in/an dem Tankgehäuse enthält, weil die Füllstandserfassung erforderlich ist, um zu bestimmen, ob die Grauwassermenge als Spülflüssigkeit für die wenigstens eine angeschlossene Vorrichtung (insbes. Toilette) ausreicht bzw. ob ein Entleeren des Grauwassertanks stattfinden soll. Das Vakuumentsorgungssystem dient insbesondere dem Entwässern des Grauwassertanks (und auch der Toilette), aber auch dem Verhindern eines Überlaufens des Grauwassertanks und dem Abreinigen der Filterwand im Grauwassertank. Und das Vakuumentsorgungssystem wird insbesondere zum Entwässern des Grauwassertanks nur aktiviert, wenn die angeschlossenen Waschvorrichtungen und Toiletten nicht betrieben werden und somit nicht aktiv sind, sodass beim aktiven Vakuumentsorgungssystem nach anfänglicher Entwässerung nur Luft statt Wasser aus diesen Vorrichtungen in den Grauwassertank eingesaugt wird. Das Vakuumentsorgungssystem weist vorzugsweise ein Spülventil in der Abwasserleitung oder bei deren Anschluss am Grauwassertank auf.

In einer Ausgestaltung der Erfindung ist das Luftstrombegrenzungselement im Anschluss für die Grauwassereinleitung mit einer Steuereinheit verbunden, die das Luftstrombegrenzungselement während des gesamten Ausleitvorgangs des Grauwassers mittels des Vakuumentsorgungssystems aktiviert, insbesondere auf einen vorbestimmten Begrenzungsfaktor (z.B. vollständig sperren oder zumindest stark sperren). Alternativ kann der Grauwassertank zusätzlich zur Füllstandssensorik ferner eine Filterblocksensorik zum Erfassen einer durch Verschmutzung zumindest teilweisen Verblockung der Filterwand aufweisen und kann das Luftstrombegrenzungselement im Anschluss für die Grauwassereinleitung mit einer Steuereinheit verbunden sein, die das Luftstrombegrenzungselement während des Ausleitvorgangs des Grauwassers mittels des Vakuumentsorgungssystems aktiviert (auf einen vorbestimmten Begrenzungsfaktor oder variabel je nach Filterblockstatus), wenn die Filterblocksensorik eine zumindest teilweise Verblockung der Filterwand erfasst. Die Filterblocksensorik kann zum Beispiel wenigstens einen Sensor zum direkten Erfassen der Blockung aufweisen oder der Füllstandssensorik entsprechen, um aus verschiedenen Füllstandshöhen in Tankinnenraum und Tankaußenraum eine Verstopfung abzuleiten. Die erstgenannte Variante ohne Filterblocksensorik ist jedoch vorteilhafter, weil weniger Aufwände bei Herstellung und Steuerung des Grauwassertanks existieren. Noch bevorzugter kann das Luftstrombegrenzungselement im Anschluss für die Grauwassereinleitung in Form einer flexiblen Gummilippe derart ausgebildet sein, dass die Luftstrombegrenzung ohne die Steuereinheit passiv abläuft.

In einer Ausgestaltung der Erfindung weist der Grauwassertank ferner wenigstens ein Lufteinlassventil auf, das im Bereich des Tankaußenraums an der Tankgehäusedecke oder der Tankgehäuseseitenwand angeordnet ist und konfiguriert ist, um bei Öffnung Umgebungsluft (z.B. aus Flugzeugkabine) in den Tankaußenraum einströmen zu lassen. Das Lufteinlassventil wird insbesondere während des Ausleitvorgangs des Grauwassers mittels des Vakuumentsorgungssystems geöffnet, damit der Umgebungsluftstrom ähnlich wie der Luftstrom von der Grauwasserweiterleitung vom Tankaußenraum zum Tankinnenraum gesaugt wird und insbesondere bei aktiviertem Luftstrombegrenzungselement am Tankinnenraum zusätzlich zum Luftstrom von der Grauwasserweiterleitung sogar einen verblockten Teil der Filterwand durchströmen kann. Als Ergebnis kann hierdurch die Verschmutzung noch effektiver bzw. an mehr verschiedenen Filterwandabschnitten von der Filterwand gelöst und in das ausströmende Grauwasser gespült werden. Das Lufteinlassventil kann optional auch während des Weiterleitvorgangs des Grauwassers zur Toilette geöffnet werden, um einen Druckausgleich im Grauwassertank zu erzielen und dadurch eine Schaumvermeidung zu erzielen.

In einer Ausgestaltung der Erfindung kann die Filterwand ferner in ihrem der Tankgehäusedecke zugewandten Bereich angrenzend an den zweiten Filterwandabschnitt außerdem noch einen dritten, oberen durchlässigen Filterwandabschnitt aufweisen, denn ganz oben kann die Filterwand wieder vorteilhaft durchlässig sein, weil dort nur selten Grauwasser anliegt und sich deshalb ohnehin kaum Verschmutzungen anheften.

Die Filterwand, insbesondere der erste Filterwandabschnitt und wenn vorhanden auch der dritte Filterwandabschnitt können durch ein selbsttragendes Filtermaterial, welches keine Stützstruktur benötigt, gebildet sein. Ein hierfür geeignetes Material können beispielsweise ein Metallgewebe oder eine perforierte Metalloberfläche sein. Vorzugsweise verbindet die Filterwand den Tankgehäuseboden mit der Tankgehäusedecke.

Vorzugsweise entsprechen der untere durchlässige erste Filterwandabschnitt der Filterwand dem am häufigsten mit Grauwasser benetzten Bereich (beispielsweise etwa 75-100% der Zeit), der obere durchlässige dritte Filterwandabschnitt der Filterwand dem nur manchmal mit Grauwasser benetzten Bereich (beispielsweise etwa 0-25% der Zeit), und der zweite Filterwandabschnitt der Filterwand dem oft mit Grauwasser benetzten Bereich (z.B. etwa 25-75% der Zeit). Bei einer derartigen Benetzung der einzelnen Filterwandabschnitte wird erreicht, dass insgesamt eine Verschmutzung der Filterwand minimiert wird, da die überwiegende Zeit sich der Füllstand des Grauwassertanks im Bereich des zweiten Filterwandabschnitts befindet und dieser Bereich die geringste mikrobiologische Ansiedlungsfähigkeit bzw. Ansiedlungsfläche aufweist, weil sich die mikrobiologischen Teilchen, die zu einer Verschmutzung der Filterwand führen können sich hauptsächlich an der Wasseroberfläche anlagern. Eine entsprechende Regelung der Füllstandshöhe wird weiter unten beschrieben.

In einer Ausgestaltung der Erfindung ist die Filterwand in einer freien Lagerung an dem Tankgehäuseboden und der Tankgehäusedecke angebracht, sodass sie relativ zum Tankgehäuse (z.B. in Richtung quer zur Tankgehäuseseitenwand) frei bewegbar ist. Alternativ ist die Filterwand zumindest teilweise etwas ausdehnbar bzw. elastisch ausgestaltet. Durch das oben erläuterte Luftstrombegrenzungselement entstehen im Vakuumentsorgungsbetrieb große Druckverhältnisse zwischen Tankinnenraum und Tankaußenraum, sodass sich die Filterwand bei dieser Ausgestaltung mechanisch bewegt bzw. variiert, wodurch die Filterwand beim Anschlagen an die Ränder der Lagerung bzw. bei den flexiblen Verformungen eine Beschleunigung des Luftstroms durch die Filterwand erzeugt und dadurch die Verschmutzungen noch besser gelöst werden. Beispielsweise können die Druckverhältnisse zwischen Tankinnenraum und Tankaußenraum hierzu durch eine hohe Ein-Aus-Frequenz des Vakuumentsorgungssystems noch mehr verstärkt werden, wodurch das Luftdurchströmen und damit die Reinigung noch effektiver werden.

In einer Ausgestaltung der Erfindung weist die Filterwand in ihrem dem Tankgehäuseboden zugewandten Bereich einen ersten durchlässigen Filterwandabschnitt auf, der in Richtung zum Tankgehäuseboden zumindest teilweise nach außen geneigt ist und/oder unregelmäßig geformt ist. Die Neigung des ersten Filterwandabschnitts und die unregelmäßige Form erzeugen beide eine größere aktive Filterfläche und lassen deshalb die Verunreinigung noch besser in den Wasserraumteil des Tankinnenraums unterhalb der Filterkammer (zum Beispiel "Sumpf" genannt) abfallen.

Optional umfasst der Grauwassertank ferner einen Anschluss für eine Frischwassereinleitung aus einem Frischwassertank, der im Bereich des Tankaußenraums an der Tankgehäusedecke oder der Tankgehäuseseitenwand angeordnet ist. Wenn für die Spülflüssigkeit benutzende Vorrichtung (insbes. Toilette) nicht direkt Frischwasser bereitgestellt wird, sondern nur die Wiederverwendung des Grauwassers aus dem Grauwassertank, dann kann auf diese Weise über den Grauwassertank auch Frischwasser zur Toilette geliefert werden, insbesondere wenn der Grauwassertank zu leer ist oder wenn das Grauwasser zu sehr verschmutzt ist. Die Filterwand im Grauwassertank dient auch zum Schutz des sauberen Frischwassers oder der sauberen Grauwasser-Fischwasser-Mischung zur Toilette.

Optional kann der Grauwassertank ferner einen an der Tankgehäuseseitenwand vorgesehenen Anschluss für eine Grauwasserausleitung zum Ausleiten des im Tankgehäuse überwiegend vorhandenen Grauwassers aufweisen, wobei in der Grauwasserausleitung oder optional im Anschluss ein entsprechendes Überlaufventil angeordnet ist. Über diese Grauwasserausleitung kann zum Beispiel bei einem Flugzeug Grauwasser während des Fluges direkt aus dem Flugzeug in die Flugzeugumgebung ausgeleitet werden (z.B. drain mast).

In einer Ausgestaltung der Erfindung weist die Füllstandssensorik wenigstens einen ersten Füllstandssensor im Tankaußenraum und wenigstens einen zweiten Füllstandssensor im Tankinnenraum auf. Durch die in Tankaußenraum und in Tankinnenraum erfassten Füllstände kann der Füllstand des Grauwassertanks zuverlässiger ermittelt werden, und durch eine Differenz der Füllstände in Tankaußenraum und in Tankinnenraum kann zudem auch eine Verblockung bzw. ein Verblockungsmaß der Filterwand durch Verschmutzungen ermittelt werden.

Zur Regelung des Füllstands des Grauwassers innerhalb des Grauwassertanks, insbesondere zur Einhaltung der Benetzung des zweiten Filterwandabschnitts über 25-75% der Zeit kann Wasser in den Grauwassertank eingeleitet werden, sobald der Füllstand unter das untere Ende des zweiten Filterwandabschnitts absinkt. Dies kann vorzugsweise mittels Einleitung von Frischwasser über den Anschluss für die Frischwassereinleitung durchgeführt werden. Die Einleitung von Frischwasser wird mittels der Steuereinheit gesteuert solange erfolgen, bis der Füllstand das untere Ende des zweiten Filterwandabschnitts überschritten hat. Alternativ kann auch weiteres Grauwasser dem Grauwassertank zugeführt werden. Hierzu wird der Zulauf der Grauwasser abgebenden Vorrichtung, insbesondere der Waschvorrichtung derart von der Steuereinheit angesteuert, dass derart viel Grauwasser in den Grauwassertank eingeleitet wird, dass der Füllstand in dem Grauwassertank das untere Ende des zweiten Filterwandabschnitts überschritten hat. Zu diesem Zweck ist ein Frischwasserzuführelement wie etwa eine Pumpe oder ein Wasserhahn, welches zwischen Frischwassertank und der Grauwasser abgebenden Vorrichtung angeordnet ist, mit der Steuereinheit verbunden.

Eine weitere Möglichkeit zur Regelung des Füllstands des Grauwassers innerhalb des Grauwassertanks besteht darin, eine in der Grauwasserweiterleitung angeordnete Pumpe mittels der Steuereinheit zu verbinden und die Pumpe derart anzusteuern, dass diese so viel Grauwasser aus dem Grauwassertank abpumpt, dass der Füllstand des Grauwassertanks im Bereich des zweiten Filterwandabschnitts liegt. Diese weitere Möglichkeit der Füllstandsregelung dient also dazu, den Füllstand nach oben zu begrenzen.

Gemäß einem zweiten Aspekt der Erfindung umfasst das Grauwassersystem einen oben beschriebenen Grauwassertank gemäß der Erfindung, der über eine Grauwassereinleitung mit wenigstens einer Grauwasser abgebenden Vorrichtung, insbesondere Waschvorrichtung (z.B. Handwaschbecken, Dusche, Geschirrspülmaschine) verbunden ist; ein Vakuumentsorgungssystem zum Ausleiten des Grauwassers aus dem Grauwassertank; wenigstens eine Spülflüssigkeit benutzende Vorrichtung, insbesondere Toilette, die über eine Grauwasserweiterleitung mit dem Grauwassertank verbunden ist; und eine Steuereinheit zum Ansteuern des Vakuumentsorgungssystems und des Luftbegrenzungselements im Anschluss für die Grauwassereinleitung und des Weiterleitens des Grauwassers über die Grauwasserweiterleitung jeweils in Abhängigkeit vom Füllstand des Grauwassertanks. Mit diesem Grauwassersystem werden dieselben Vorteile erzielt, wie oben in Bezug auf den erfindungsgemäßen Grauwassertank erläutert.

In Abhängigkeit von der Ausgestaltung des erfindungsgemäßen Grauwassertanks ist die Steuereinheit vorzugsweise ferner konfiguriert zum Ansteuern (i) des wenigstens einen Lufteinlassventils im Bereich des Tankaußenraums des Grauwassertanks und/oder (ii) eines Ventils im Anschluss zur Frischwassereinleitung zum Einleiten von Frischwasser in den Grauwassertank (20) und/oder (iii) eines Überlaufventils im Anschluss zur Grauwasserausleitung oder in der Grauwasserausleitung zum Ausleiten des im Tankgehäuse überwiegend vorhandenen Grauwassers.

In einer Ausgestaltung der Erfindung weist die wenigstens eine Spülflüssigkeit benutzende Vorrichtung (insbes. Toilette), die mit dem Grauwassertank verbunden ist, auch einen Anschluss für eine Abwasserleitung zum Ausleiten des Abwassers mittels des Vakuumentsorgungssystems auf, wobei das Vakuumentsorgungssystem ferner ein Spülventil in dieser Abwasserleitung oder in diesem Anschluss aufweist. Demgemäß wird dasselbe Vakuumentsorgungssystem, d.h. insbesondere derselbe Abwassertank mit daran angeschlossenem Vakuumgeneratorsystem, für den Grauwassertank und für die Toilette verwendet, wobei die Abwasserleitung der Toilette die Abwasserleitung des Grauwassertanks kontaktiert oder selbst zum Abwassertank führt.

Der erfindungsgemäße Grauwassertank und das erfindungsgemäße Grauwassersystem sind besonders vorteilhaft anwendbar für Flugzeuge und auch für andere Fahrzeuge (z.B. Schiffe, Züge).

Die Erfindung ist durch die anhängenden Ansprüche definiert. Obige sowie weitere Merkmale und Vorteile der Erfindung werden aus der nachfolgenden beispielhaften Beschreibung bevorzugter, nicht-einschränkender Ausführungsbeispiele anhand der beiliegenden Zeichnung besser verständlich. Darin zeigen, größtenteils schematisch:
- Fig. 1: den Aufbau eines Ausführungsbeispiels eines Grauwassersystems gemäß der Erfindung;
- Fig. 2: eine Seitenschnittansicht eines Ausführungsbeispiels eines Grauwassertanks gemäß der Erfindung für ein Grauwassersystem;
- Fig. 3A: eine Zustands-Schnittansicht des Grauwassertanks von Fig. 2 während einer Vakuumspülung ohne verblockte erste, dritte durchlässige Filterwandabschnitte der Filterwand;
- Fig. 3B: eine Zustands-Schnittansicht des Grauwassertanks von Fig. 2 während einer Vakuumspülung mit verblockten ersten, dritten durchlässigen Filterwandabschnitten der Filterwand;
- Fig. 3C: eine Zustands-Schnittansicht des Grauwassertanks von Fig. 2 während einer Vakuumspülung mit verblockten ersten, dritten durchlässigen Filterwandabschnitten der Filterwand bei aktiviertem Luftstrombegrenzungselement;
- Fig. 4A: eine Seitenansicht der Filterkammer im Grauwassertank gemäß einer ersten weiteren Ausführungsvariante gemäß der Erfindung; und
- Fig. 4B: eine Seitenansicht der Filterkammer im Grauwassertank gemäß einer zweiten weiteren Ausführungsvariante gemäß der Erfindung.

Die nachfolgend erläuterten Ausführungsbeispiele des Grauwassersystems und des Grauwassertanks sind insbesondere in Flugzeugen, aber auch in anderen Fahrzeugen (z.B. Schiffen, Zügen) einsetzbar.

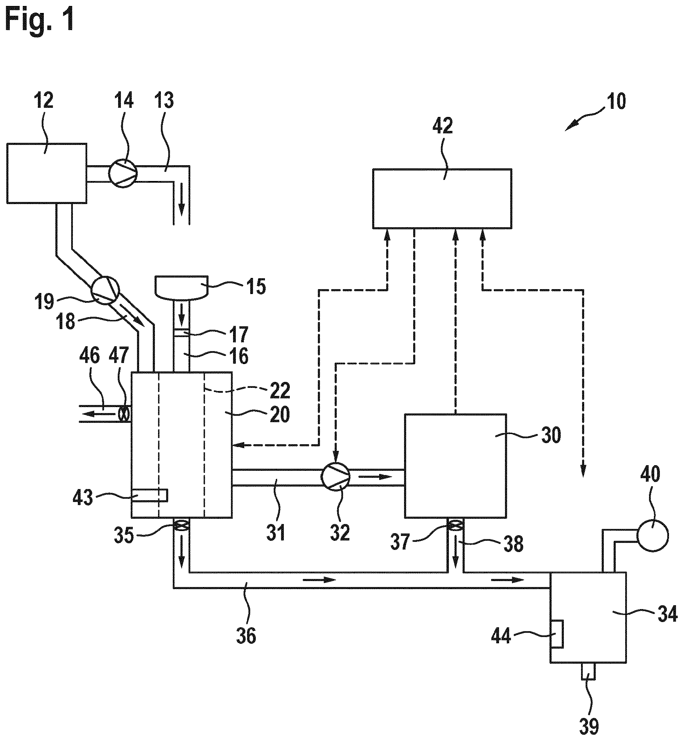

Bezugnehmend auf Fig. 1 wird nun ein Ausführungsbeispiel eines Grauwassersystems gemäß der Erfindung erläutert.

Das Grauwassersystem 10 enthält einen Grauwassertank 20 mit einer Filterwand 22 zum Bilden einer Filterkammer darin und einer Füllstandssensorik 43. Dieser Grauwassertank 20 ist über eine Grauwassereinleitung 16 mit einer Waschvorrichtung (z.B. Handwaschbecken) 15 verbunden, die über eine Frischwasserleitung 13 mittels einer Pumpe 14 aus einem Frischwassertank 12 Frischwasser erhält und das beim Waschen benutzte Frischwasser als sogenanntes Grauwasser über die Grauwassereinleitung 16 an den Grauwassertank 10 abgibt. Wie in Fig. 1 angedeutet, kann in der Grauwassereinleitung 16 optional ein Vorfilter 17 angeordnet sein, damit nur ein etwas vorab gereinigtes Grauwasser in den Grauwassertank 20 eingeleitet wird. Obwohl in Fig. 1 nur eine Waschvorrichtung 15 gezeigt ist, die Grauwasser an den Grauwassertank 20 abgibt, kann der Grauwassertank 20 wahlweise auch mit mehreren Waschvorrichtungen 16 verbunden sein, deren Grauwassereinleitung 16 vorzugsweise miteinander kontaktiert sind, sodass am Grauwassertank 20 nur ein Grauwassereinleitungselement angekoppelt ist. Aufbau und Funktionsweise des Grauwassertanks 20 werden nachfolgend unter Bezug auf die weiteren Figuren konkreter erläutert.

Das Grauwassersystem 10 enthält ferner eine Toilette 30. Da die Toilette 30 in diesem Ausführungsbeispiel nicht mit einem Frischwassertank verbunden ist, benutzt sie Grauwasser als Spülflüssigkeit. Wahlweise könnte die Toilette 30 aber auch mit einem Frischwassertank verbunden sein, um dann je nach Wassermengenverhältnissen und Wasserzuständen als Spülflüssigkeit entweder das Frischwasser aus dem Frischwassertank oder das Grauwasser zu verwenden. Zum Verwenden von Grauwasser als Spülflüssigkeit ist die Toilette 30 über eine Grauwasserweiterleitung 31 mit dem Grauwassertank 20 verbunden, wobei in der Grauwasserweiterleitung 31 vorzugsweise eine Pumpe 32 zum Fördern des Grauwassers angeordnet ist. Obwohl in Fig. 1 nur eine einzige Toilette 30 gezeigt ist, kann das Grauwassersystem 10 auch mehrere Toiletten 30 enthalten, wobei diese dann alle über die Grauwasserweiterleitung 31 mit dem Grauwassertank 20 verbunden sein können, um aus dem Grauwassertank 20 Grauwasser als Spülflüssigkeit zu erhalten.

Wie in Fig. 1 angedeutet, kann der Grauwassertank 20 zusätzlich zur Verbindung mit der Waschvorrichtung 15 über die Grauwassereinleitung 16 optional auch über eine Frischwassereinleitung 18 mit dem Frischwassertank 12 verbunden sein, damit der Grauwassertank 20 je nach Menge und Verschmutzung des Grauwassers im Grauwassertank 20 auch noch etwas Frischwasser aufnehmen kann. In der Frischwassereinleitung 18 ist hierzu auch eine Pumpe 19 zum Fördern des Frischwassers enthalten. Im Ausführungsbeispiel von Fig. 1 ist der Grauwassertank 20 mit demselben Frischwassertank 20 verbunden wie die Waschvorrichtung 15. Falls mehrere Frischwassertanks vorhanden sind, könnte der Grauwassertank 20 alternativ auch mit einem anderen Frischwassertank als die Waschvorrichtung 15 verbunden sein.

Das Grauwassersystem 10 enthält ferner ein Vakuumentsorgungssystem 34-40, das mit dem Grauwassertank 20 verbunden ist, um Grauwasser aus dem Grauwassertank 20 auszuleiten. Im Ausführungsbeispiel von Fig. 1 ist die Toilette 30 mit demselben Vakuumentsorgungssystem 34-40 zum Ausleiten des Spülwassers verbunden. Wie in Fig. 1 angedeutet, umfasst das Vakuumentsorgungssystem 34-40 einen Abwassertank 34 zum Aufnehmen des ausgeleiteten Grauwassers und Spülwassers, der auch einen Abwasserauslass 39 und eine Füllstandssensorik 44 enthält, eine Abwasserleitung 36 zur Verbindung des Grauwassertanks 20 mit dem Wassertank 34, ein Spülventil 35 (vorzugsweise in der Abwasserleitung 36 nahe dem Grauwassertank 20) zum Aktivieren der Grauwasserentsorgung aus dem Grauwassertank, eine Abwasserleitung 38 zur Verbindung der Toilette 30 mit dem Wassertank 34, wobei diese Abwasserleitung 38 in diesem Ausführungsbeispiel mit der anderen Abwasserleitung 36 gekoppelt ist, ein Spülventil 37 (vorzugsweise in der Abwasserleitung 38 nahe der Toilette 30 zum Aktivieren der Spülwasserentsorgung aus der Toilette), und ein Vakuumgeneratorsystem 40 (üblicherweise mit einem Abluftrohr zum Fahrzeugaußenraum und einem Vakuumgenerator) zum Generieren von Unterdruck in den Abwasserleitungen 36, 38 und im Abwassertank 34 zum Aussaugen des Grauwassers aus dem Grauwassertank 20 bzw. des Spülwassers aus der Toilette 30. Ein solches Vakuumentsorgungssystem 34-40 ist dem Fachmann grundsätzlich bekannt, weshalb auf detailliertere Erläuterungen über Aufbau und Funktionsweise des Vakuumentsorgungssystem verzichtet werden kann. Im erfindungsgemäßen Grauwassersystem 10 können grundsätzlich beliebige funktionsfähige Ausführungsvarianten des Vakuumentsorgungssystems benutzt werden.

Wie in Fig. 1 dargestellt, ist der Grauwassertank 20 optional auch mit einer Grauwasserausleitung 46 verbunden, wobei in der Grauwasserausleitung 46 oder am Grauwassertank 20 ein Überlaufventil 47 zum Aktivieren angeordnet ist. Über diese Grauwasserausleitung 46 kann insbesondere ein überwiegend vorhandenes Grauwasser aus dem Grauwassertank 20 ausgeleitet werden, wobei das Grauwasser über diese Grauwasserausleitung 46 aus dem jeweiligen Fahrzeug, insbesondere Flugzeug, während des Fahrens (bzw. Fliegens) aus dem Fahrzeug direkt in die Flugzeugumgebung ausgeleitet wird.

Im Grauwassersystem 10 ist zudem eine Steuereinheit 42 vorhanden. Wie in Fig. 1 ein bisschen angedeutet, dient diese Steuereinheit 42 der Ansteuerung des Grauwassertanks 20 (wie nachfolgend unter Bezug auf die weiteren Figuren konkreter erläutert), der Pumpe 32 zum Weiterleiten des Grauwassers aus dem Grauwassertank 20 zur Toilette 30, und des Vakuumentsorgungssystems 34-40. Für diese Ansteuerungen empfängt die Steuereinheit 42 relevante Parameterdaten der Elemente des Grauwassersystems 10, insbesondere Füllstand des Grauwassertanks 20 (um zu erkennen, ob die Grauwassermenge im Grauwassertank 20 für das Weiterleiten von Grauwasser als Spülflüssigkeit zur Toilette 30 ausreicht und ob ein Entleeren des Grauwassertanks 20 stattfinden soll), Aktivität der Toilette 30 (um zu erkennen, ob Grauwasser als Spülflüssigkeit zur Toilette 30 weitergeleitet werden soll), Nichtbenutzung und somit Inaktivität der Waschvorrichtung 15 und der Toilette 30 (um zu erkennen, ob ein Entleeren des Grauwassertanks 20 mittels des Vakuumentsorgungssystems 34-40 ausgeführt werden kann, weil dann nur Luft statt Wasser aus diesen Vorrichtungen 15, 30 in den Grauwassertank 20 eingesaugt werden soll, wobei das Entleeren des Grauwassertanks 20 durch das Vakuumentsorgungssystem 34-40 auch bei aktiver Waschvorrichtung 15 ausgeführt werden kann), Füllstand des Abwassertanks 34 (um zu erkennen, ob das Vakuumentsorgungssystem noch aktiviert werden kann).

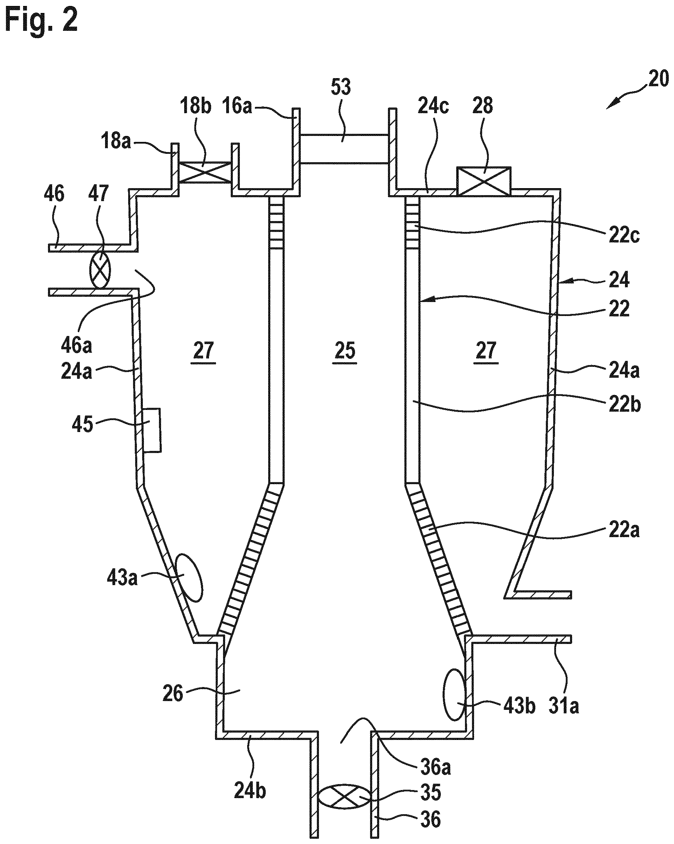

Bezugnehmend auf Fig. 2 wird nun ein konkretes Ausführungsbeispiel eines Grauwassertanks 20 gemäß der Erfindung für das oben erläuterte Grauwassersystem 10 näher erläutert.

Der Grauwassertank 20 hat ein Tankgehäuse 24, das aus einer Tankgehäuseseitenwand 24a, einem Tankgehäuseboden 24b und einer Tankgehäusedecke 24c gebildet ist, wobei sich die Tankgehäuseseitenwand 24a zwischen dem Tankgehäuseboden 24b und der Tankgehäusedecke 24c erstreckt und das so gebildete Tankgehäuse 24 einen Innenraum zum Aufnehmen von Grauwasser bildet. Das Tankgehäuse 24 ist über den größten Teil seiner Längsrichtung (Oben-Unten-Richtung in Fig. 2) im Wesentlichen zylindrisch geformt, wobei die Zylinderform beispielsweise eine im Wesentlichen kreisförmige, quadratische oder mehreckige Querschnittsform haben kann. Innerhalb des Tankgehäuses 24 ist eine Filterwand 22 zum Bilden einer Filterkammer angeordnet. Die Filterwand 22 erstreckt sich zwischen dem Tankgehäuseboden 24b und der Tankgehäusedecke 24b derart, dass einerseits innerhalb der Filterwand 22 ein Tankinnenraum 25 vorhanden ist und andererseits zwischen der Filterwand 22 und der Tankgehäuseseitenwand 24a ein Tankaußenraum 27 vorhanden ist. Im Bereich der Tankinnenwand 25 ist der Tankgehäuseboden 26 etwas vertieft, wodurch unterhalb der Filterwand 22 ein Wasserraumteil 26 (evtl. "Sumpf" genannt) für die Ausleitung des Grauwassers zum Abwassertank 34 entsteht.

Wie in Fig. 2 veranschaulicht, hat die Filterwand 22 einen dem Tankgehäuseboden 24b zugewandten ersten, unteren durchlässigen Filterwandabschnitt 22a, angrenzend an diesen ersten, unteren durchlässigen Filterabschnitt 22a einen zweiten, undurchlässigen Filterwandabschnitt 22b, und einen der Tankgehäusedecke 24c zugewandten dritten, oberen durchlässigen Filterwandabschnitt 22c. Die durchlässigen Filterwandabschnitte 22a, 22c filtern aus dem Grauwasser Verschmutzungen heraus, die dann in diesen durchlässigen Filterwandabschnitten 22a, 22c angeheftet bleiben, insbesondere wenn das Grauwasser zwischen dem Tankinnenraum 25 und dem Tankaußenraum 27 strömt. Auf diese Weise wird das Grauwasser zur Toilette 30 möglichst ohne Verschmutzungen weitergeleitet. Am zweiten, undurchlässigen Filterwandabschnitt 22b kann sich jedoch keine oder allenfalls nur sehr wenig Verschmutzung anheften. Der zweite Filterwandabschnitt 22b weist nämlich gegenüber dem ersten Filterwandabschnitt 22a und in diesem Ausführungsbeispiel auch gegenüber dem dritten Filterwandabschnitt 22c eine niedrigere mikrobiologische Ansiedlungsfläche auf. Dies wird einerseits durch die undurchlässige Ausgestaltung des zweiten Filterwandabschnitts erzielt. Andererseits ist der zweite, undurchlässige Filterwandabschnitt 22b der Filterwand 22 vorzugsweise auch aus einem Material ausgeführt, an welchem Mikroorganismen schlecht oder gar nicht anhaften (z.B. PTFE). Der erste, untere durchlässige Filterwandabschnitt 22a der Filterwand 22 ist in diesem Ausführungsbeispiel vorzugsweise in Richtung nach unten zum Tankgehäuseboden 24b zumindest teilweise nach außen geneigt, wodurch eine etwas größere aktive Filterfläche als bei einem vertikalen ersten, unteren durchlässigen Filterwandabschnitt 22a entsteht, was die Verschmutzung des Grauwassers noch besser in den unteren Wasserraumteil ("Sumpf") 26 des Tankinnenraums 25 fördert. Obwohl nicht dargestellt, kann der erste, untere durchlässige Filterwandabschnitt 22a der Filterwand 22 alternativ oder zusätzlich unregelmäßig geformt sein, wodurch ebenfalls eine größere aktive Filterfläche entsteht.

Der erste, untere durchlässige Filterwandabschnitt 22a der Filterwand 22 erstreckt sich über den am häufigsten mit Grauwasser benetzten Bereich (beispielsweise etwa 75-100% der Zeit), der dritte, obere durchlässige Filterwandabschnitt 22c der Filterwand 22 erstreckt sich über den nur manchmal mit Grauwasser benetzten Bereich (beispielsweise etwa 0-25% der Zeit), und der zweite, undurchlässige Filterwandabschnitt 22b der Filterwand 22 entspricht dem oft mit Grauwasser benetzten Bereich (z.B. etwa 25-75% der Zeit).

Im unteren Wasserraumteil 26 ist am Tankgehäuseboden 24b ein Anschluss 36a für die Abwasserleitung 36 angeordnet, durch den Grauwasser mittels des Vakuumentsorgungssystem 34-40 aus dem Grauwassertank 20 ausgesaugt werden kann, wenn das Spülventil 35 die Kopplung zur Abwasserleitung 36 während des Ausleitvorgangs öffnet. In diesem Ausführungsbeispiel ist das Spülventil 35 in der Abwasserleitung 36 angeordnet, alternativ könnte das Spülventil 35 auch im Anschluss 36a am Grauwassertank 20 angeordnet sein.

An der Tankgehäusedecke 24c ist im Bereich des Tankinnenraums 25 ein Anschluss 16a für die Grauwassereinleitung 16 von der wenigstens einen Waschvorrichtung 15 vorgesehen. In diesem Anschluss 16a für die Grauwassereinleitung 16 ist außerdem ein Luftstrombegrenzungselement 53 angeordnet. Das Luftstrombegrenzungselement 53 ist beispielsweise in Form einer flexiblen Gummilippe ausgebildet, sodass es während des Ausleitvorgangs des Grauwassers eine Luftstrombegrenzung in den Grauwassertank 20 bewirkt. Das Luftstrombegrenzungselement 53 kann andererseits auch konfiguriert sein, um während des Ausleitvorgangs des Grauwassers mittels des Vakuumentsorgungssystems 34-40 aktiviert zu werden und dadurch Luftstrom von der Grauwassereinleitung 16 in den Tankinnenraum 25 zu begrenzen oder ganz zu sperren. In diesem Fall wird das Luftstrombegrenzungselement 53 von der Steuereinheit 42 des Grauwassersystems 10 angesteuert, vorzugsweise während des gesamten Ausleitvorgangs des Grauwassers mittels des Vakuumentsorgungssystems automatisch auf einen vorbestimmten Begrenzungsfaktor. Wie in Fig. 2 angedeutet, kann der Grauwassertank 20 optional auch eine Filterblocksensorik 45 zum Erfassen einer durch Verschmutzung zumindest teilweisen Verblockung der Filterwand 22 aufweisen, deren erfasste Parameterdaten an die Steuereinheit 42 geliefert werden, sodass die Steuereinheit 42 das Luftstrombegrenzungselement 53 im Anschluss 16a für die Grauwassereinleitung 16 dann während des Ausleitvorgangs des Grauwassers mittels des Vakuumentsorgungssystems 34-40 wahlweise nur aktiviert (auf einen vorbestimmten Begrenzungsfaktor oder variabel je nach Filterblockstatus), wenn die Filterblocksensorik 45 eine zumindest teilweise Verblockung der Filterwand 22 erfasst. Die Filterblocksensorik 45 enthält zum Beispiel wenigstens einen Sensor zum direkten Erfassen der Blockung der Filterwand 22.

Am Tankgehäuse 22 ist im Bereich des ersten, unteren durchlässigen Filterwandabschnitts 22a der Filterwand 22 zum Beispiel an der Tankgehäuseseitenwand 24a oder dem Tankgehäuseboden 24b ein Anschluss 31a für die Grauwasserweiterleitung 31 zu der wenigstens einen Toilette 30 angeordnet.

Vorzugsweise ist im Bereich des Tankaußenraums 27 an der Tankgehäusedecke 24c außerdem ein Lufteinlassventil 28 angeordnet. Das Lufteinlassventil 28 kann während des Ausleitvorgangs des Grauwassers mittels des Vakuumentsorgungssystems 34-40 durch die Steuereinheit 42 angesteuert werden, um geöffnet zu werden, damit zum Beispiel aus einer Flugzeugkabine Umgebungsluft in den Tankaußenraum 27 des Grauwassertanks 20 einströmt. Optional kann dieses Lufteinlassventil 28 auch während des Weiterleitvorgangs des Grauwassers zur Toilette 30 geöffnet werden.

Da der Grauwassertank 20 im Ausführungsbeispiel von Fig. 1 auch mit einem Frischwassertank 12 verbunden ist, ist im Bereich des Tankaußenraums 27 an der Tankgehäusedecke 24c (oder alternativ an der Tankgehäuseseitenwand 24a nahe der Tankgehäusedecke 24c) außerdem ein Anschluss 18a für die Frischwassereinleitung 18 aus dem Frischwassertank 12 angeordnet. Die Filterwand 22 dient auch dem Schutz des sauberen Frischwassers oder der sauberen Grauwasser-Fischwasser-Mischung zur Toilette 30. Optional ist in diesem Anschluss 18a für die Frischwassereinleitung 18 außerdem ein Ventil 18b angeordnet, das von der Steuereinheit 42 während des Ausleitvorgangs des Grauwassers mittels des Vakuumentsorgungssystems 34-40 geschlossen werden kann, um während des Ausleitvorgangs des Grauwassers ein Einströmen von Frischwasser in den Grauwassertank 20 zu verhindern.

An der Tankgehäuseseitenwand 24a ist im oberen Bereich optional außerdem ein Anschluss 46a vorgesehen, durch den ein im Tankgehäuse 22 überwiegend vorhandenes Grauwasser ausgeleitet werden kann. An diesen Anschluss 46a ist dann eine Grauwasserausleitung 46 angeschlossen (wie in Fig. 1 dargestellt), durch die zumindest ein Teil des umfangreichen Grauwassers schon während des Fluges direkt aus dem Flugzeug in die Flugzeugumgebung ausgeleitet werden kann. In diesem Ausführungsbeispiel ist zum Öffnen der Kopplung des Anschlusses 46a zur Grauwasserausleitung 46 ein Spülventil 47 in der Grauwasserausleitung 46 angeordnet, wobei das Spülventil 47 alternativ auch im Anschluss 46a am Grauwassertank 20 angeordnet sein könnte.

Wie in Fig. 2 angedeutet, weist die Füllstandssensorik 43 zum Erfassen eines Füllstands des Tankgehäuses 24 mit Grauwasser vorzugsweise einen ersten Füllstandssensor 43a im Tankaußenraum 27 und einen zweiten Füllstandssensor 43b im Tankinnenraum 25 (zum Beispiel im Bereich des unteren Wasserraumteils 26) auf. Die von der Füllstandssensorik 43 erfassten Parameterdaten werden an die Steuereinheit 42 des Grauwassersystems 10 geliefert, um die Weiterleitung von Grauwasser zur Toilette 30 und die Ausleitung von Grauwasser mittels des Vakuumentsorgungssystems 34-40 sowie gegebenenfalls die Einleitung von Frischwasser in den Grauwassertank 20 gemäß der im Grauwassertank 20 existierenden Grauwassermenge anzusteuern. Bei diesem Einsatz von wenigstens zwei Füllstandssensoren 43a, 43b in verschiedenen Räumen 25, 27 des Grauwassertanks 20 kann der Füllstand des Grauwassertanks 20 zuverlässig ermittelt werden und kann außerdem basierend auf einer Differenz der Füllstände in Tankaußenraum 27 und in Tankinnenraum 25 auch eine Verblockung bzw. ein Verblockungsmaß der Filterwand 22 durch Verschmutzungen ermittelt werden.

Das Ausführungsbeispiel von Fig. 2 zeigt außerdem eine optionale Modifizierung des erfindungsgemäßen Grauwassertanks 20, dass die Tankgehäuseseitenwand 24a im unteren Endbereich der Filterwand 22 in Richtung nach unten zum Tankgehäuseboden 24b nach innen geneigt ist. Als Folge davon entsteht sogar bei einer geringen Änderung der Füllhöhe des Grauwassers im Grauwassertank 20 eine starke Volumenänderung, wodurch der Bereich des ersten, unteren durchlässigen Filterwandabschnitts 22a der Filterwand 22 schneller vollständig benetzt wird, was für die mögliche Weiterleitung des Grauwassers zur Toilette 30 vorteilhaft ist.

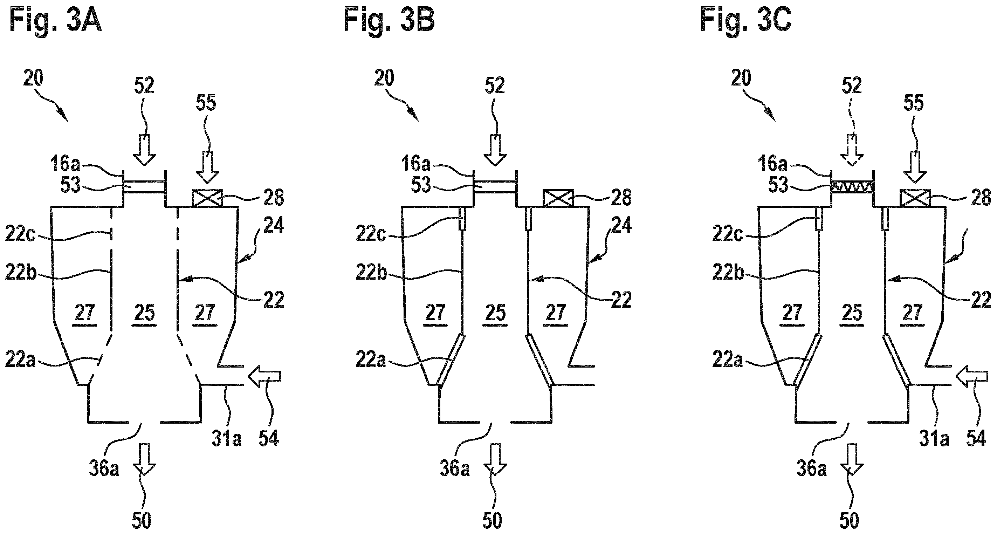

Bezugnehmend auf Fig. 3A,3B,3C wird nun die Reinigungseffektivität des erfindungsgemäßen Grauwassertanks 20 aufgrund des Luftstrombegrenzungselements 53 veranschaulicht.

Fig. 3A zeigt einen Zustand des Grauwassertanks 20, bei dem die durchlässigen Filterwandabschnitte 22a, 22c der Filterwand nicht durch Verschmutzungen abgeblockt sind. Bei Aktivierung des Vakuumentsorgungssystems 34-40 für den Ausleitvorgang des Grauwassers aus dem Grauwassertank 20 wird durch Öffnen des Spülventils 35 der Anschluss 36a zur Abwasserleitung 36 gekoppelt, um durch den Unterdruck in der Abwasserleitung 36 und dem Abwassertank 34 das Grauwasser zusammen mit seinen Verschmutzungen aus dem Grauwassertank 20 auszusaugen (Grauwasserstrom 50). Durch dieses Aussagen des Grauwassers aus dem Grauwassertank 20 entsteht auch im Tankgehäuse 24 ein geringerer Druckzustand, sodass bei nicht aktiviertem Luftstrombegrenzungselement 53 von der nicht betriebenen Waschvorrichtung 15 ein Luftstrom 52 durch den Anschluss 16a in das Tankgehäuse 24 gesaugt wird, von der nicht aktiven Toilette 30 ein Luftstrom 54 durch den Anschluss 31a in den Tankaußenraum 27 und weiter durch den ersten unteren durchlässigen Filterwandabschnitt 22a in den Tankinnenraum 25 gesaugt wird, und durch das geöffnete Lufteinlassventil 28 ein Umgebungsluftstrom 55 in den Tankaußenraum 27 und weiter durch den dritten oberen durchlässigen Filterwandabschnitt 22c und auch durch den ersten unteren durchlässigen Filterwandabschnitt 22a in den Tankinnenraum 25 gesaugt wird. Durch diese Luftströme 52, 54, 56 werden der Tankinnenraum 25 und der Tankaußenraum 27 des Tankgehäuses 24 und auch die Filterwand 22 von enthaltenen bzw. angehefteten Verschmutzungen abgelöst und dann zusammen mit dem Grauwasser ausgeleitet werden, was zu einer Reinigung des Tankgehäuses 24 und der Filterwand 22 führt.

Fig. 3B zeigt einen Zustand des Grauwassertanks 20, bei dem die durchlässigen Filterwandabschnitte 22a, 22c der Filterwand durch Verschmutzungen verblockt sind, im Fall eines nicht aktivierten bzw. nicht vorhandenen Luftstrombegrenzungselement 53, d.h. gemäß herkömmlichen Grauwassertanks. Bei Aktivierung des Vakuumentsorgungssystems 34-40 für den Ausleitvorgang des Grauwassers aus dem Grauwassertank 20 wird durch Öffnen des Spülventils 35 der Anschluss 36a zur Abwasserleitung 36 gekoppelt, um durch den Unterdruck in der Abwasserleitung 36 und dem Abwassertank 34 das Grauwasser zusammen mit seinen Verschmutzungen aus dem Grauwassertank 20 auszusaugen (Grauwasserstrom 50). Durch dieses Aussagen des Grauwassers aus dem Grauwassertank 20 entsteht zumindest im Tankinnenraum 25 des Tankgehäuses 24 ein geringerer Druckzustand, sodass bei nicht aktiviertem bzw. nicht vorhandenem Luftstrombegrenzungselement 53 von der nicht betriebenen Waschvorrichtung 15 ein Luftstrom 52 durch den Anschluss 16a in das Tankgehäuse 24 gesaugt wird. Aufgrund der verblockten durchlässigen Filterwandabschnitte 22a, 22c wird allerdings der Druck im Tankaußenraum 27 nicht oder nur sehr wenig reduziert, sodass weder von der nicht aktiven Toilette 30 noch durch das geöffnete Lufteinlassventil 28 irgendein Luftstrom in den Tankaußenraum 27 gesaugt wird und insbesondere auch nicht durch die durchlässigen Filterwandabschnitte 22a,22c in den Tankinnenraum 25 gesaugt wird. Durch die nicht entstehenden Luftströme 54, 56 können der Tankaußenraum 27 und insbesondere die verblockten Filterwandabschnitte 22a,22c der Filterwand 22 nicht von den enthaltenen bzw. angehefteten Verschmutzungen abgelöst und dann zusammen mit dem Grauwasser ausgeleitet werden, weshalb keine effektive Reinigung des Tankgehäuses 24 und der Filterwand 22 möglich ist.

Fig. 3C zeigt einen Zustand des Grauwassertanks 20, bei dem die durchlässigen Filterwandabschnitte 22a, 22c der Filterwand durch Verschmutzungen verblockt sind, im Fall eines aktivierten Luftstrombegrenzungselement 53, d.h. gemäß dem erfindungsgemäßen Grauwassertank 20. Bei Aktivierung des Vakuumentsorgungssystems 34-40 für den Ausleitvorgang des Grauwassers aus dem Grauwassertank 20 wird durch Öffnen des Spülventils 35 der Anschluss 36a zur Abwasserleitung 36 gekoppelt, um durch den Unterdruck in der Abwasserleitung 36 und dem Abwassertank 34 das Grauwasser zusammen mit seinen Verschmutzungen aus dem Grauwassertank 20 auszusaugen (Grauwasserstrom 50). Durch dieses Aussagen des Grauwassers aus dem Grauwassertank 20 entsteht zumindest im Tankinnenraum 25 des Tankgehäuses 24 ein geringerer Druckzustand. Da erfindungsgemäß das Luftstrombegrenzungselement 53 im Anschluss 16a für die Grauwassereinleitung 16 aktiviert wird bzw. selbst agiert, wird von der nicht betriebenen Waschvorrichtung 15 gar kein Luftstrom 52 oder ein nur sehr geringer Luftstrom 52a durch den Anschluss 16a in den Tankinnenraum 25 des Tankgehäuses 24 gesaugt. Durch den allenfalls sehr geringen Luftstrom 52a in den Tankinnenraum 25 ist der Druck im Tankinnenraum 25 im Vergleich zum herkömmlichen Zustand gemäß Fig. 3B wesentlich geringer, sodass zum Tankaußenraum 27, in dem aufgrund der verblockten durchlässigen Filterwandabschnitte 22a, 22c der Druck nicht oder nur sehr wenig reduziert ist, zumindest ein großer Druckunterschied zwischen dem Tankinnenraum 25 und dem Tankaußenraum 27 entsteht. Durch dieses geänderte Druckverhältnis werden der Luftstrom 54 von der Grauwasserweiterleitung 31 und der Umluftstrom 55 durch das Lufteinlassventil 28 stärker vom Tankaußenraum 27 zum Tankinnenraum 25 gesaugt und können somit sogar die verblockten Filterwandabschnitte 22a, 22c der Filterwand 22 durchströmen. Folglich kann durch den Einsatz des Luftstrombegrenzungselements 53 gemäß der Erfindung auch bei durch Verschmutzung verblockten Filterwandabschnitten 22a, 22c die Verschmutzung vom undurchlässigen Filterwandabschnitt 22b und aus den durchlässigen Filterwandabschnitten 22a, 22c der Filterwand gelöst und in das ausströmende Grauwasser gespült werden. Die Reinigung der Filterwand 22 ist somit auch bei starker Verschmutzung des Grauwassertanks 20, die in der Praxis grundsätzlich möglich ist, möglich und sehr effektiv, sodass der erfindungsgemäße Grauwassertank 20 sicherer funktionsfähig ist zum Weiterleiten eines nicht zu schmutzigen Grauwassers als Spülflüssigkeit zur Toilette 30.

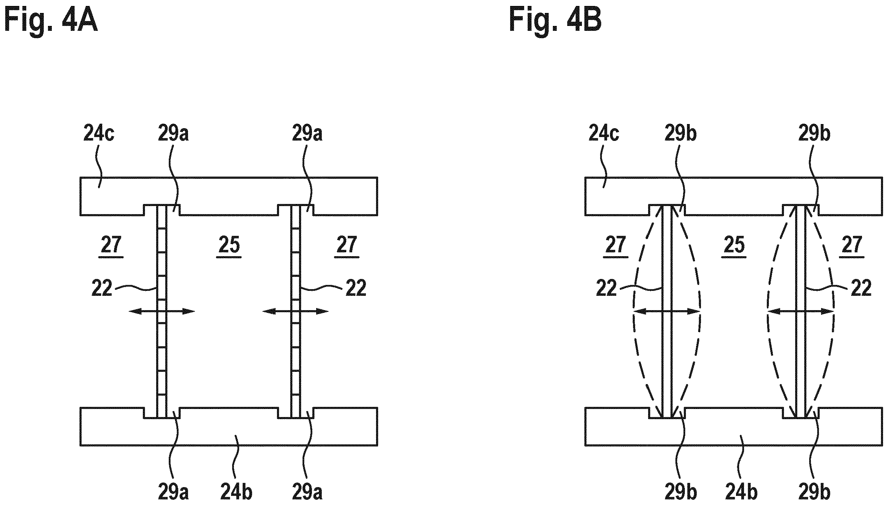

Bezugnehmend auf Fig. 4A und 4B werden nun spezielle Ausführungsformen der Filterwand 22 für den erfindungsgemäßen Grauwassertank 20 erläutert.

Fig. 4A zeigt eine optionale modifizierte Ausführungsform des erfindungsgemäßen Grauwassertanks 20. Wie in Fig. 4A veranschaulicht, ist die Filterwand 22 in einer freien Lagerung 29a sowohl am Tankgehäuseboden 24b als auch an der Tankgehäusedecke 24c angebracht, sodass sie relativ zum Tankgehäuse 24, beispielsweise in Richtung quer zur Tankgehäuseseitenwand 24a etwas bewegbar ist. Durch die oben in Bezug auf Fig. 3C erläuterte Wirkung des Luftstrombegrenzungselements 53 im Anschluss 16a für die Grauwassereinleitung 16 entstehen große Druckverhältnisse zwischen Tankinnenraum 25 und Tankaußenraum 27, sodass sich die Filterwand 22 bei dieser Ausgestaltung etwas in Richtung quer zur Tankgehäuseseitenwand 24a bewegt (wie durch die beiden Rechts-Links-Pfeile angedeutet). Als Folge davon schlägt die Filterwand 22 an die Ränder der Lagerung 29a an, wodurch eine Beschleunigung des jeweiligen Luftstroms 54, 55 durch die Filterwand 22 erzeugt wird und dadurch die Verschmutzungen noch besser aus den durchlässigen Filterwandabschnitten 22a, 22c der Filterwand 22 gelöst werden können. In diesem Zusammenhang können die Druckverhältnisse zwischen Tankinnenraum 25 und Tankaußenraum 27 wahlweise durch eine hohe Ein-Aus-Frequenz des Vakuumentsorgungssystems 34-40 noch mehr verstärkt werden, wodurch das Luftdurchströmen und damit die Reinigung noch effektiver werden können.

Fig. 4B zeigt eine alternative optionale modifizierte Ausführungsform des erfindungsgemäßen Grauwassertanks 20. Wie in Fig. 4B veranschaulicht, ist die Filterwand 22 in einer engen Lagerung 29b sowohl am Tankgehäuseboden 24b als auch an der Tankgehäusedecke 24c angebracht und zusätzlich zumindest teilweise etwas ausdehnbar bzw. elastisch ausgestaltet. Durch die oben in Bezug auf Fig. 3C erläuterte Wirkung des Luftstrombegrenzungselement 53 im Anschluss 16a für die Grauwassereinleitung 16 entstehen im Vakuumentsorgungsbetrieb große Druckverhältnisse zwischen Tankinnenraum 25 und Tankaußenraum 27, sodass sich die Filterwand 22 bei dieser Ausgestaltung mechanisch etwas bewegt bzw. variiert (wie durch die beiden Rechts-Links-Pfeile angedeutet). Als Folge davon wird der Filterwand 22 flexibel verformt, wodurch eine Beschleunigung des jeweiligen Luftstroms 54, 55 durch die Filterwand 22 erzeugt wird und dadurch die Verschmutzungen noch besser aus den durchlässigen Filterwandabschnitten 22a, 22c der Filterwand 22 gelöst werden können. Auch in diesem Zusammenhang können die Druckverhältnisse zwischen Tankinnenraum 25 und Tankaußenraum 27 wahlweise durch eine hohe Ein-Aus-Frequenz des Vakuumentsorgungssystems 34-40 noch mehr verstärkt werden, wodurch das Luftdurchströmen und damit die Reinigung noch effektiver werden können.

Die Erfindung ist durch die anhängenden Ansprüche definiert. Die oben erläuterten Ausführungsbeispiele dienen nur dem besseren Verständnis der Erfindung, sollen aber nicht den durch die Ansprüche definierten Schutzbereich einschränken. Wie für den Fachmann ersichtlich, sind auch noch andere Ausführungsformen im Rahmen der Erfindung möglich, insbesondere durch Weglassen einzelner Merkmale aus den oder Hinzufügen zusätzlicher Merkmale in die oben beschriebenen Ausführungsbeispiele und durch weitere Merkmalskombinationen von oben erläuterten Ausführungsbeispielen.

### BEZUGSZIFFERNLISTE

- 10: Grauwassersystem
- 12: Frischwassertank
- 13: Frischwasserleitung von 12 zu 15
- 14: Pumpe in 13
- 15: Grauwasser abgebende Vorrichtung (insbes. Waschvorrichtung)
- 16: Grauwassereinleitung von 15 in 20
- 16a: Anschluss für 16 an 24c und 25
- 17: Vorfilter in 16
- 18: Frischwassereinleitung von 12 in 20
- 18a: Anschluss für 18 an 24c und 27
- 18b: Ventil in Anschluss 18a
- 19: Pumpe in 18
- 20: Grauwassertank
- 22: Filterwand
- 22a: erster Filterwandabschnitt der Filterwand
- 22b: zweiter Filterwandabschnitt der Filterwand
- 22c: dritter Filterwandabschnitt der Filterwand
- 24: Tankgehäuse
- 24a: Tankgehäuseseitenwand
- 24b: Tankgehäuseboden
- 24c: Tankgehäusedecke
- 25: Tankinnenraum innerhalb der Filterwand
- 26: Wasserraumteil des Tankinnenraums unterhalb Filterkammer
- 27: Tankaußenraum zwischen Filterwand und Tankgehäuseseitenwand
- 28: Lufteinlassventil in 24 und 27
- 29a: freie Lagerung der Filterwand in 24b,24c
- 29b: enge Lagerung der Filterwand in 24b,24c
- 30: Spülflüssigkeit benutzende Vorrichtung (insbes. Toilette)
- 31: Grauwasserweiterleitung von 20 zu 30
- 31a: Anschluss für 31 an 24a
- 32: Pumpe in 31
- 34-40: Vakuumentsorgungssystem
- 34: Abwassertank
- 35: Spülventil für Grauwassertank zu 36,34
- 36: Abwasserleitung von 20 zu 34
- 36a: Anschluss für 36 an 24b
- 37: Spülventil für 30 zu 38
- 38: Abwasserleitung von 30 zu 34
- 39: Abwasserauslass
- 40: Vakuumgeneratorsystem zum Unterdruck in 34,36,38 zum Abwasserabsaugen
- 42: Steuereinheit
- 43: Füllstandssensorik in/an Grauwassertank
- 43a: erster Füllstandssensor in 27
- 43b: zweiter Füllstandssensor in 25
- 44: Füllstandssensorik in/an Abwassertank
- 45: Filterblocksensorik
- 46: Grauwasserausleitung bei Überlauf
- 46a: Anschluss für 46 an 24a
- 47: Überlaufventil des Grauwassertanks an 24a zu 46
- 50: Grauwasserstrom aus 20 zu 34
- 52: Luftstrom von 15 in 20
- 52a: begrenzter Luftstrom von 15 in 20
- 53: Luftstrombegrenzungselement in 16a
- 54: Luftstrom von 30 in 20
- 55: Umgebungsluftstrom in 20

## Patentansprüche

1. Grauwassertank (20), aufweisend
ein Tankgehäuse (24) mit einem durch einen Tankgehäuseboden (24b), eine Tankgehäusedecke (24c) und eine sich zwischen dem Tankgehäuseboden (24b) und der Tankgehäusedecke (24c) erstreckenden Tankgehäuseseitenwand (24a) gebildeten Innenraum zum Aufnehmen von Grauwasser;
eine Filterwand (22), die innerhalb des Tankgehäuses (24) zwischen dem Tankgehäuseboden (24b) und der Tankgehäusedecke (24c) so angeordnet ist, dass ein Tankinnenraum (25) innerhalb der Filterwand (22) und ein Tankaußenraum (27) zwischen der Filterwand (22) und der Tankgehäuseseitenwand (24a) vorhanden sind, wobei die Filterwand (22) angrenzend an einen ersten, unteren durchlässigen Filterwandabschnitt (22a) in ihrem dem Tankgehäuseboden (24b) zugewandten Bereich einen zweiten Filterwandabschnitt (22b) mit gegenüber dem ersten Filterwandabschnitt (22a) niedrigerer mikrobiologischer Ansiedlungsfähigkeit aufweist, die dadurch bewerkstellig ist, dass der zweite Filterwandabschnitt (22b) zumindest an seiner Oberfläche aus einem Material gebildet ist, bei dem nur sehr wenig oder keine Verschmutzungen in Form von Mikroorganismen und / oder Schmutzpartikel nur schlecht bis gar nicht anhaften können;
eine Füllstandssensorik (43) zum Erfassen eines Füllstands des Tankgehäuses (24) mit Grauwasser;
einen an der Tankgehäusedecke (24c) im Bereich des Tankinnenraums (25) vorgesehenen Anschluss (16a) für eine Grauwassereinleitung (16) von wenigstens einer Grauwasser abgebenden Vorrichtung (15);
einen am Tankgehäuse (24) vorgesehenen Anschluss (31a) für eine Grauwasserweiterleitung (31) zu wenigstens einer Spülflüssigkeit benutzenden Vorrichtung (30);
einen am Tankgehäuseboden (24b) im Bereich des Tankinnenraums (25) vorgesehenen Anschluss (36a) für eine Abwasserleitung (36) zum Ausleiten des im Tankgehäuse (24) vorhandenen Grauwassers mittels eines Vakuumentsorgungssystems (34-40); und
ein im Anschluss (16a) für die Grauwassereinleitung (16) angeordnetes Luftstrombegrenzungselement (53), das konfiguriert ist, um während eines Ausleitvorgangs des Grauwassers mittels des Vakuumentsorgungssystems (34-40) einen Luftstrom von der Grauwassereinleitung (16) in den Tankinnenraum (25) innerhalb der Filterwand (22) zu begrenzen.

2. Grauwassertank (20) nach Anspruch 1, bei welchem
das Luftstrombegrenzungselement (53) im Anschluss (16a) für die Grauwassereinleitung (16) mit einer Steuereinheit (42) verbunden ist, die das Luftstrombegrenzungselement (53) während des gesamten Ausleitvorgangs des Grauwassers mittels des Vakuumentsorgungssystems (34-40) aktiviert; oder
der Grauwassertank (20) ferner eine Filterblocksensorik (45) zum Erfassen einer durch Verschmutzung zumindest teilweisen Verblockung der Filterwand (22) aufweist und das Luftstrombegrenzungselement (53) im Anschluss (16a) für die Grauwassereinleitung (16) mit einer Steuereinheit (42) verbunden ist, die das Luftstrombegrenzungselement (53) während des Ausleitvorgangs des Grauwassers mittels des Vakuumentsorgungssystems (34-40) aktiviert, wenn die Filterblocksensorik (45) eine zumindest teilweise Verblockung der Filterwand (22) erfasst; oder
das Luftstrombegrenzungselement (53) im Anschluss (16a) für die Grauwassereinleitung (16) in Form einer flexiblen Gummilippe derart ausgebildet ist, dass die Luftstrombegrenzung ohne die Steuereinheit (42) passiv abläuft.

3. Grauwassertank (20) nach Anspruch 1 oder 2, ferner aufweisend wenigstens ein Lufteinlassventil (28), das im Bereich des Tankaußenraums (24a) an der Tankgehäusedecke (24c) oder der Tankgehäuseseitenwand (24a) angeordnet ist und konfiguriert ist, um bei Öffnung Umgebungsluft in den Tankaußenraum (25) einströmen zu lassen.

4. Grauwassertank (20) nach einem der vorhergehenden Ansprüche, bei welchem die Filterwand (22) ferner in ihrem der Tankgehäusedecke (24c) zugewandten Bereich angrenzend an den zweiten Filterwandabschnitt (22b) einen dritten, oberen durchlässigen Filterwandabschnitt (22c) aufweist.

5. Grauwassertank (20) nach Anspruch 4, bei welchem , bei Gebrauch, der erste Filterwandabschnitt (22a) der Filterwand (22) dem am häufigsten mit Grauwasser benetzten Bereich entspricht, der dritte Filterwandabschnitt (22c) der Filterwand (22) dem nur manchmal mit Grauwasser benetzten Bereich entspricht, und der zweite Filterwandabschnitt (22b) der Filterwand (22) dem oft mit Grauwasser benetzten Bereich entspricht.

6. Grauwassertank (20) nach einem der Ansprüche 1 bis 5, bei welchem die Filterwand (22) in einer freien Lagerung (29a) an dem Tankgehäuseboden (24b) und der Tankgehäusedecke (24c) angebracht ist, sodass sie relativ zum Tankgehäuse (24) frei bewegbar ist.

7. Grauwassertank (20) nach einem der Ansprüche 1 bis 5, bei welchem die Filterwand (22) zumindest teilweise etwas ausdehnbar ausgestaltet ist.

8. Grauwassertank (20) nach einem der vorhergehenden Ansprüche, bei welchem die Filterwand (22) in ihrem dem Tankgehäuseboden (24b) zugewandten Bereich den ersten durchlässigen Filterwandabschnitt (22a) aufweist, der in Richtung zum Tankgehäuseboden (24b) zumindest teilweise nach außen geneigt ist und/oder unregelmäßig geformt ist.

9. Grauwassertank (20) nach einem der vorhergehenden Ansprüche, ferner aufweisend einen Anschluss (18a) für eine Frischwassereinleitung (18) aus einem Frischwassertank (12), welcher Anschluss (18a) im Bereich des Tankaußenraums (27) an der Tankgehäusedecke (24c) oder der Tankgehäuseseitenwand (24a) angeordnet ist.

10. Grauwassertank (20) nach einem der vorhergehenden Ansprüche, ferner aufweisend einen an der Tankgehäuseseitenwand (24a) vorgesehenen Anschluss (46a) für eine Grauwasserausleitung (46) zum Ausleiten des im Tankgehäuse (24) überwiegend vorhandenen Grauwassers.

11. Grauwassertank (20) nach einem der vorhergehenden Ansprüche, bei welchem die Füllstandssensorik (43) einen ersten Füllstandssensor (43a) im Tankaußenraum (27) und einen zweiten Füllstandssensor (43b) im Tankinnenraum (25) aufweist.

12. Grauwassersystem (10), aufweisend
den Grauwassertank (20) gemäß einem der Ansprüche 2 bis 11, der über die Grauwassereinleitung (16) mit wenigstens einer der Grauwasser abgebenden Vorrichtungen (15) des Grauwassersystems (10) verbunden ist;
dem Vakuumentsorgungssystem (34-40) zum Ausleiten des Grauwassers aus dem Grauwassertank (20);
die wenigstens eine Spülflüssigkeit benutzende Vorrichtung (30), die über die Grauwasserweiterleitung (31) mit dem Grauwassertank (20) verbunden ist; und die Steuereinheit (42) zum Ansteuern des Vakuumentsorgungssystems (34-40) und des Luftbegrenzungselements (53) im Anschluss (16a) für die Grauwassereinleitung (16) und des Weiterleitens des Grauwassers über die Grauwasserweiterleitung (31) jeweils in Abhängigkeit vom Füllstand des Grauwassertanks (20).

13. Grauwassersystem (10) nach Anspruch 12, bei welchem die Steuereinheit (42) ferner konfiguriert ist zum Ansteuern (i) - in Verbindung mit dem Grauwassertank (20) nach einem der Ansprüche 3 bis 11 - des wenigstens einen Lufteinlassventils (28) im Bereich des Tankaußenraums (24a) des Grauwassertanks (20) und/oder (ii) - in Verbindung mit dem Grauwassertank (20) nach einem der Ansprüche 9 bis 11 - eines Ventils (18b) im Anschluss (18a) zur Frischwassereinleitung (18) zum Einleiten des Frischwassers in den Grauwassertank (20) und/oder (iii) - in Verbindung mit dem Grauwassertank (20) nach einem der Ansprüche 10 bis 11 - eines Überlaufventils (47) im Anschluss (46a) zur Grauwasserausleitung (46) oder in der Grauwasserausleitung (46) zum Ausleiten des im Tankgehäuse (24) überwiegend vorhandenen Grauwassers.

14. Grauwassersystem (10) nach Anspruch 12 oder 13, bei welchem die wenigstens eine Spülflüssigkeit benutzende Vorrichtung (30), die mit dem Grauwassertank (20) verbunden ist, auch einen Anschluss (38a) für eine Abwasserleitung (38) zum Ausleiten des Abwassers mittels des Vakuumentsorgungssystems (34-40) aufweist.

## Claims

1. Grey water tank (20), having
a tank housing (24) having an internal space for holding grey water, said internal space being formed by a tank housing bottom (24b), a tank housing top (24c) and a tank housing side wall (24a) extending between the tank housing bottom (24b) and the tank housing top (24c);
a filter wall (22), which is arranged inside the tank housing (24) between the tank housing bottom (24b) and the tank housing top (24c) in such a way that there is an inner tank chamber (25) within the filter wall (22) and an outer tank chamber (27) between the filter wall (22) and the tank housing side wall (24a), wherein, adjacent to a first, lower, permeable filter wall portion (22a), in its region facing the tank housing bottom (24b), the filter wall (22) has a second filter wall portion (22b) with a lower microbiological settlement capacity than the first filter wall portion (22a), this being brought about in that the second filter wall portion (22b), at least on its surface, is formed from a material to which only very few or no contaminants in the form of microorganisms and/or dirt particles can adhere very poorly or not at all;
a fill level sensor system (43) for detecting a fill level of the tank housing (24) with grey water;
a connection (16a), provided on the tank housing top (24c) in the region of the inner tank chamber (25), for a grey water inlet line (16) from at least one device (15) that discharges grey water;
a connection (31a), provided on the tank housing (24), for a grey water transfer line (31) to at least one device (30) that uses flushing liquid;
a connection (36a), provided on the tank housing bottom (24b) in the region of the inner tank chamber (25), for a waste water line (36) for discharging the grey water present in the tank housing (24) by means of a vacuum discharge system (34-40); and
an air flow limiting element (53) arranged in the connection (16a) for the grey water inlet line (16), said element being configured to limit an air flow from the grey water inlet line (16) into the inner tank chamber (25) within the filter wall (22) during a process of grey water discharge by means of the vacuum discharge system (34-40).

2. Grey water tank (20) according to Claim 1, in which the air flow limiting element (53) in the connection (16a) for the grey water inlet line (16) is connected to a control unit (42) which activates the air flow limiting element (53) during the entire process of grey water discharge by means of the vacuum discharge system (34-40); or the grey water tank (20) furthermore has a filter block sensor system (45) for detecting an at least partial blockage of the filter wall (22) by contamination, and the air flow limiting element (53) in the connection (16a) for the grey water inlet line (16) is connected to a control unit (42) which activates the air flow limiting element (53) during the process of grey water discharge by means of the vacuum discharge system (34-40) if the filter block sensor system (45) detects an at least partial blockage of the filter wall (22); or the air flow limiting element (53) in the connection (16a) for the grey water inlet line (16) is in the form of a flexible rubber lip, such that the air flow limitation takes place passively without the control unit (42).

3. Grey water tank (20) according to Claim 1 or 2, furthermore comprising at least one air inlet valve (28) which is arranged in the region of the outer tank chamber (24a) on the tank housing top (24c) or the tank housing side wall (24a) and is configured, when opened, to allow ambient air to flow into the outer tank chamber (25).

4. Grey water tank (20) according to one of the preceding claims, in which the filter wall (22) furthermore has, in its region facing the tank housing top (24c), a third, upper, permeable filter wall portion (22c) adjacent to the second filter wall portion (22b).

5. Grey water tank (20) according to Claim 4, in which, when in use, the first filter wall portion (22a) of the filter wall (22) corresponds to the region that is wetted most frequently by grey water, the third filter wall portion (22c) of the filter wall (22) corresponds to the region that is wetted only occasionally by grey water, and the second filter wall portion (22b) of the filter wall (22) corresponds to the region that is wetted often by grey water.

6. Grey water tank (20) according to one of Claims 1 to 5, in which the filter wall (22) is mounted in a free support arrangement (29a) on the tank housing bottom (24b) and the tank housing top (24c), making it freely movable relative to the tank housing (24).

7. Grey water tank (20) according to one of Claims 1 to 5, in which the filter wall (22) is of somewhat expandable configuration, at least in part.

8. Grey water tank (20) according to one of the preceding claims, in which the filter wall (22) has, in its region facing the tank housing bottom (24b), the first permeable filter wall portion (22a) which is at least in part inclined outwards in a direction towards the tank housing bottom (24b) and/or is of irregular shape.

9. Grey water tank (20) according to one of the preceding claims, furthermore having a connection (18a) for a fresh water inlet line (18) from a fresh water tank (12), which connection (18a) is arranged on the tank housing top (24c) or the tank housing side wall (24a) in the region of the outer tank chamber (27).

10. Grey water tank (20) according to one of the preceding claims, furthermore having a connection (46a), provided on the tank housing side wall (24a), for a grey water discharge line (46) for discharging the excess grey water present in the tank housing (24).

11. Grey water tank (20) according to one of the preceding claims, in which the fill level sensor system (43) has a first fill level sensor (43a) in the outer tank chamber (27) and a second fill level sensor (43b) in the inner tank chamber (25).

12. Grey water system (10), having
the grey water tank (20) according to one of Claims 2 to 11, which is connected via the grey water inlet line (16) to at least one of the devices (15) of the grey water system (10) that discharge grey water;
the vacuum discharge system (34-40) for discharging the grey water from the grey water tank (20);
the at least one device (30) that uses flushing liquid and is connected via the grey water transfer line (31) to the grey water tank (20); and
the control unit (42) for controlling the vacuum discharge system (34-40) and the air limiting element (53) in the connection (16a) for the grey water inlet line (16) and the transfer of the grey water via the grey water transfer line (31), depending in each case on the fill level of the grey water tank (20).

13. Grey water system (10) according to Claim 12, in which the control unit (42) is furthermore configured to control (i) - when connected to the grey water tank (20) according to one of Claims 3 to 11 - the at least one air inlet valve (28) in the region of the outer tank chamber (24a) of the grey water tank (20) and/or (ii) - when connected to the grey water tank (20) according to one of Claims 9 to 11 - a valve (18b) in the connection (18a) to the fresh water inlet line (18) for letting the fresh water into the grey water tank (20) and/or (iii) - when connected to the grey water tank (20) according to one of Claims 10 to 11 - an overflow valve (47) in the connection (46a) to the grey water discharge line (46) or in the grey water discharge line (46) for discharging the excess grey water present in the tank housing (24).

14. Grey water system (10) according to Claim 12 or 13, in which the at least one device (30) that uses flushing liquid and is connected to the grey water tank (20) also has a connection (38a) for a waste water line (38) for discharging the waste water by means of the vacuum discharge system (34-40).

## Revendications

1. Réservoir d'eau grise (20), comportant
un boîtier (24) de réservoir avec un espace intérieur, formé par un fond (24b) de boîtier de réservoir, un couvercle (24c) de boîtier de réservoir et une paroi latérale (24a) de boîtier de réservoir s'étendant entre le fond (24b) de boîtier de réservoir et le couvercle (24c) de boîtier de réservoir, pour recevoir l'eau grise ;
une paroi filtrante (22), qui est disposée à l'intérieur du boîtier (24) de réservoir entre le fond (24b) de boîtier de réservoir et le couvercle (24c) de boîtier de réservoir de telle sorte qu'un espace intérieur (25) de réservoir est présent à l'intérieur de la paroi filtrante (22) et un espace extérieur (27) de réservoir est présent entre la paroi filtrante (22) et la paroi latérale (24a) de boîtier de réservoir, la paroi filtrante (22) comportant de manière adjacente à une première section inférieure (22a) de paroi filtrante perméable, dans sa zone tournée vers le fond (24b) de boîtier de réservoir, une deuxième section de paroi filtrante (22b) avec une capacité de décantation microbiologique inférieure à celle de la première section (22a) de paroi filtrante, ce qui peut être obtenu en ce que la deuxième section (22b) de paroi filtrante est formée au moins sur sa surface à partir d'un matériau dans lequel seulement très peu ou pas d'impuretés sous forme de micro-organismes et/ou de particules de saleté peuvent adhérer faiblement ou pas du tout ;
un système de détection de niveau de remplissage (43) destiné à détecter un niveau de remplissage du boîtier (24) de réservoir avec de l'eau grise ;
un raccord (16a), prévu sur le couvercle (24c) de boîtier de réservoir dans la zone de l'espace intérieur (25) de réservoir, pour une conduite d'entrée d'eau grise (16) provenant d'au moins un dispositif distribuant de l'eau grise (15) ;
un raccord (31a) prévu sur le boîtier (24) de réservoir pour une conduite de transfert d'eau grise (31) vers au moins un dispositif (30) utilisant du liquide de rinçage ;
un raccord (36a), prévu sur le fond (24b) de boîtier de réservoir dans la zone de l'espace intérieur (25) de réservoir, pour une conduite d'eaux usées (36) destinée à évacuer l'eau grise présente dans le boîtier (24) de réservoir au moyen d'un système d'élimination sous vide (34-40) ; et
un élément limiteur de flux d'air (53) disposé dans le raccord (16a) pour la conduite d'entrée d'eau grise (16), qui est configuré pour limiter un flux d'air provenant de la conduite d'entrée d'eau grise (16) dans l'espace intérieur (25) de réservoir à l'intérieur de la paroi filtrante (22) pendant une opération d'évacuation de l'eau grise au moyen du système d'élimination sous vide (34-40).

2. Réservoir d'eau grise (20) selon la revendication 1, dans lequel
l'élément limiteur de flux d'air (53) est relié, dans le raccord (16a) pour la conduite d'entrée d'eau grise (16), à une unité de commande (42), qui active l'élément limiteur de flux d'air (53) pendant toute l'opération d'évacuation de l'eau grise au moyen du système d'élimination sous vide (34-40) ; ou le réservoir d'eau grise (20) comporte en outre un système de détection de bloc filtrant (45) pour détecter un blocage de la paroi filtrante (22) au moins en partie dû à des impuretés, et l'élément limiteur de flux d'air (53) est relié dans le raccord (16a) pour la conduite d'entrée d'eau grise (16), à une unité de commande (42), qui active l'élément limiteur de flux d'air (53) pendant l'opération d'évacuation de l'eau grise au moyen du système d'élimination sous vide (34-40) lorsque le système de détection de bloc filtrant (45) détecte un blocage au moins partiel de la paroi filtrante (22) ; ou
l'élément limiteur de flux d'air (53) dans le raccord (16a) pour la conduite d'entrée d'eau grise (16) est formé sous la forme d'une lèvre flexible en caoutchouc de telle manière que la limitation de flux d'air s'effectue passivement sans l'unité de commande (42).

3. Réservoir d'eau grise (20) selon la revendication 1 ou 2, comportant en outre au moins une soupape d'admission d'air (28), qui est disposée dans la zone de l'espace extérieur (24a) de réservoir sur le couvercle (24c) de boîtier de réservoir ou sur la paroi latérale (24a) de boîtier de réservoir et qui est configurée pour laisser affluer de l'air ambiant dans l'espace extérieur (25) de réservoir lorsqu'il est ouvert.

4. Réservoir d'eau grise (20) selon l'une des revendications précédentes, dans lequel la paroi filtrante (22) comporte en outre une troisième section supérieure (22c) de paroi filtrante perméable dans sa zone tournée vers le couvercle (24b) de boîtier de réservoir de manière adjacente à la deuxième section (22b) de paroi filtrante.

5. Réservoir d'eau grise (20) selon la revendication 4, dans lequel, pendant l'utilisation, la première section (22a) de paroi filtrante de la paroi filtrante (22) correspond à la zone la plus fréquemment mouillée par l'eau grise, la troisième section (22c) de paroi filtrante de la paroi filtrante (22) correspond à la zone mouillée seulement occasionnellement par l'eau grise, et la deuxième section (22b) de paroi filtrante de la paroi filtrante (22) correspond à la zone souvent mouillée par l'eau grise.

6. Réservoir d'eau grise (20) selon l'une des revendications 1 à 5, dans lequel la paroi filtrante (22) est installée dans un logement libre (29a) sur le fond (24b) de boîtier de réservoir et le couvercle (24c) de boîtier de réservoir de manière à pouvoir se déplacer librement par rapport au boîtier (24) de réservoir.

7. Réservoir d'eau grise (20) selon l'une des revendications 1 à 5, dans lequel la paroi filtrante (22) est configurée au moins en partie de manière légèrement extensible.

8. Réservoir d'eau grise (20) selon l'une des revendications précédentes, dans lequel la paroi filtrante (22) comporte, dans sa zone tournée vers le fond (24b) de boîtier de réservoir, la première section (22a) de paroi filtrante perméable, qui est inclinée au moins en partie vers l'extérieur en direction du fond (24b) de boîtier de réservoir et/ou est formée de manière irrégulière.

9. Réservoir d'eau grise (20) selon l'une des revendications précédentes, comportant en outre un raccord (18a) pour une conduite d'entrée d'eau douce (18) provenant d'un réservoir d'eau douce (12), lequel raccord (18a) est disposé dans la zone de l'espace extérieur (27) de réservoir sur le couvercle (24c) de boîtier de réservoir ou sur la paroi latérale (24a) de boîtier de réservoir.

10. Réservoir d'eau grise (20) selon l'une des revendications précédentes, comportant en outre un raccord (46a) prévu sur la paroi latérale (24a) de boîtier de réservoir pour une conduite d'évacuation d'eau grise (46) destinée à évacuer l'eau grise majoritairement présente dans le boîtier (24) de réservoir.

11. Réservoir d'eau grise (20) selon l'une des revendications précédentes, dans lequel le système de détection de niveau de remplissage (43) comporte un premier capteur de niveau de remplissage (43a) dans l'espace extérieur (27) de réservoir et un deuxième capteur de niveau de remplissage (43b) dans l'espace intérieur (25) de réservoir.

12. Système d'eau grise (10) comportant
le réservoir d'eau grise (20) selon l'une des revendications 2 à 11, qui est relié par la conduite d'entrée d'eau grise (16) à au moins un des dispositifs distribuant de l'eau grise (15) du système d'eau grise (10) ;
le système d'élimination sous vide (34-40) destiné à évacuer l'eau grise du réservoir d'eau grise (20) ;
l'au moins un dispositif (30) utilisant un liquide de rinçage, qui est relié au réservoir d'eau grise (20) par la conduite de transfert d'eau grise (31) ; et
l'unité de commande (42) destinée à piloter le système d'élimination sous vide (34-40) et l'élément limiteur de flux d'air (53) dans le raccord (16a) pour la conduite d'entrée d'eau grise (16) et à transférer l'eau grise par la conduite de transfert d'eau grise (31) respectivement en fonction du niveau de remplissage du réservoir d'eau grise (20).

13. Système d'eau grise (10) selon la revendication 12, dans lequel l'unité de commande (42) est en outre configurée pour piloter (i) - en lien avec le réservoir d'eau grise (20) selon l'une des revendications 3 à 11 - l'au moins une soupape d'admission d'air (28) dans la zone de l'espace extérieur (24a) de réservoir du réservoir d'eau grise (20) et/ou (ii) - en lien avec le réservoir d'eau grise (20) selon l'une des revendications 9 à 11 - une soupape (18b) dans le raccord (18a) avec la conduite d'entrée d'eau douce (18) pour l'entrée d'eau douce dans le réservoir d'eau grise (20) et/ou (iii) - en lien avec le réservoir d'eau grise (20) selon l'une des revendications 10 à 11 - une soupape de trop-plein (47) dans le raccord (46a) avec la conduite d'évacuation d'eau grise (46) ou dans la conduite d'évacuation d'eau grise (46) pour évacuer l'eau grise majoritairement présente dans le boîtier (24) de réservoir.

14. Système d'eau grise (10) selon la revendication 12 ou 13, dans lequel l'au moins un dispositif (30) utilisant de l'eau de rinçage, qui est relié au réservoir d'eau grise (20), comporte également un raccord (38a) pour une conduite d'eaux usées (38) destinée à évacuer les eaux usées au moyen du système d'élimination sous vide (34-40).
